# EUROPÄISCHE PATENTANMELDUNG

(11) **EP 1 231 681 A1**
(43) Veröffentlichungstag der Anmeldung: **14.08.2002**
(21) Anmeldenummer: 02100109.4
(22) Anmeldetag: 06.02.2002
(51) Int. Cl.: H01R 25/00

(54) **Datenschnittstellengesteuerte Mehrfachsteckdose**

(30) Priorität: 09.02.2001 DE 10106025
(71) Anmelder: Philips Corporate Intellectual Property GmbH, 52066 Aachen (DE); Koninklijke Philips Electronics N.V., 5621 BA Eindhoven (NL)
(72) Erfinder: Wendt, Matthias Dr.-Ing., Weisshausstrasse 2 52066, Aachen (DE)
(74) Vertreter: Volmer, Georg, Dipl.-Ing.

(57) **Zusammenfassung**

Die Erfindung betrifft eine Anordnung zur Stromversorgung von Peripheriegeräten eines elektronischen Geräts (1) mit wenigstens einer Datenübertragungsschnittstelle. Die Aufgabe wird erfindungsgemäß dadurch gelöst, indem eine Anordnung zur Stromversorgung von Peripheriegeräten (2, 3, 4) eines dektronischen Geräts (1) mit wenigstens einer Datenübertragungsschnittstelle vorgesehen ist, wobei die Anordnung wenigstens eine Steckdose (14) und einen Netzanschlussstecker (12) aufweist sowie eine Datenübertragungsschnittstelle (10), welche zur Steuerung des Einschaltens und Ausschaltens der Steckdose (14) vorgesehen ist.

## Beschreibung

Die Erfindung betrifft eine Anordnung zur Stromversorgung von Peripheriegeräten eines elektronischen Geräts mit wenigstens einer Datenübertragungsschnittstelle.

In den vergangenen Jahren hat sich der USB (Universal Serial Bus)-Anschluss als Datenübertragungsschnittstelle bei Computern als Standardschnittstelle durchgesetzt. Dieser Bus hat neben der Funktion der Datenübertragung auch die Aufgabe die Stromversorgung für kleinere angeschlossene Peripheriegeräte wie zB. Scanner zu übernehmen. Der Leistungsbereich der Stromversorgung ist jedoch sehr begrenzt.

Aus JP 2000-231969 ist eine Vorrichtung bekannt, welche einen sogenannten USB-Hub enthält, welcher mehrere USB-Anschlüsse miteinander verbindet, sowie ein Netzteil, welches eine Netzspannung in eine Gleichspannung zur Versorgung angeschlossener USB-Peripheriegeräte zur Verfügung stellt. Des weiteren ist eine Steckdose vorgesehen, an die ein weiteres elektrisches Gerät angeschlossen werden kann.

E s ist Aufgabe der vorliegenden Erfindung, insbesondere die Stromversorgung von Peripheriegeräten eines Computers durch eine zentrale Stromversorgung sicherzustellen, welche vom Computer gesteuert werden kann. Des weiteren soll so der Stromverbrauch der Peripheriegeräte im sogenannten Stand-by Modus auf Null reduziert werden.

Die Aufgabe wird erfindungsgemäß dadurch gelöst, indem eine Anordnung zur Stromversorgung von Peripheriegeräten eines elektronischen Geräts mit wenigstens einer Datenübertragungsschnittstelle vorgesehen ist, wobei die Anordnung wenigstens eine Steckdose und einen Netzanschlussstecker aufweist sowie eine Datenübertragungs-schnittstelle, welche zur Steuerung des Einschaltens und Ausschaltens der Steckdose vorgesehen ist.

Eine solche Anordnung bietet den großen Vorteil, dass die Stromzufuhr zu den Peripheriegeräten eines elektronischen Geräts von diesem selbst gesteuert werden kann. Das elektronische Gerät wird meistens ein PC oder Laptop bzw. Notebook sein, da diese Geräte über Datenübertragungsschnittstellen verfügen, es können aber auch andere elektronische Geräte mit einer solchen Schnittstelle sein. Dazu zählen zB. Set-Top Boxen für das digitale Fernsehen oder digitale Videorekorder. Sobald z.B. ein Computer eingeschaltet wird, liegt an der Datenübertragungsschnittstelle des Computers eine Spannung an. Diese liegt über ein Kabel verbunden auch an der Datenschnittstelle der Anordnung zur Stromversorgung an und betätigt einen Schalter. Damit werden die in der Anordnung vorhandenen Steckdosen eingeschaltet und die Peripheriegeräte mit Strom versorgt. Auf diese Art und Weise können beliebige Peripheriegeräte verwendet werden, auch solche, die nicht über eine entsprechende Datenschnittstelle verfügen, da keine Kommunikation zwischen den Peripheriegeräten und dem Computer erforderlich ist. Da die Anordnung zur Stromversorgung unmittelbar am Stromnetz hängt, können auch leistungsstarke Peripheriegeräte problemlos mit Strom versorgt werden. Dies ist wichtig, da die heute oft verwendete Datenschnittstelle nach dem USB-Standard nur Peripheriegeräte mit kleiner elektrischer Leistungsaufnahme mit Strom versorgen kann. Zusätzlich werden die Peripheriegeräte vollständig vom Stromnetz getrennt, wenn der Computer ausgeschaltet wird, da damit am Schalter der Anordnung zur Stromversorgung keine Spannung mehr anliegt und diese somit ausgeschaltet wird. Die Netzschalter der einzelnen Peripheriegeräte müssen somit nicht mehr betätigt werden. Dies erhöht den Komfort und reduziert den Stromverbrauch bei abgeschaltetem Computer auf Null. Dies ist um so bedeutender, als viel Peripheriegeräte aus Kostengründen überhaupt nicht mehr über einen Netzschalter verfügen und somit ständig im Stand-by Modus Strom ziehen würden. dies wird mit der erfindungsgemäßen Anordnung zuverlässig verhindert.

Die Ausgestaltung nach Anspruch 2 zeichnet sich dadurch aus, dass als Datenschnittstelle der USB-Anschluss genutzt wird. Jeder aktuelle Computer ob Tischgerät oder tragbares Gerät verfügt heute über einen solchen USB-Anschluss. Damit ist sichergestellt, dass die erfindungsgemäße Anordnung mit allen auf dem Markt befindlichen Computern zusammenarbeiten kann.

Mit der Ausgestaltung nach Anspruch 3 ist eine individuelle Ansteuerung einzelner Steckdosen möglich. So wird nun nicht mehr nur unterschieden, ob an der Datenschnittstelle eine Spannung anliegt: oder nicht, sondern der Computer kann einzelne Steckdosen ein- und ausschalten. Damit sind dann nur die Peripheriegeräke mit Strom versorgt, auf die der Computer gerade zugreift. Wenn zB. ein Ausdruck gemacht werden soll, wird der Drucker mit Strom versorgt. Wird hingegen eine Zeichnung eingescannt, wird nur der Scanner mit Strom versorgt. So wird der Stromverbrauch auch beim Betrieb des Computers durch selektive Schaltung der Peripheriegeräte reduziert

Die Ausgestaltung nach Anspruch 4 stellt eine besonders einfach Möglichkeit dar, die Steckdosen zu schalten. Liegt an der Datenübertragungsschnittstelle eine Spannung an, wird ein Relais aktiviert, welches die Steckdosen an die Netzspannung schaltet. Sobald die Datenübertragungsschnittstelle keine Spannung mehr führt, schaltet das Relais die Steckdosen wieder ab. Somit werden die Steckdosen eingeschaltet, sobald der Computer eingeschaltet ist, und sie werden wieder ausgeschaltet, wenn der Computer ausgeschaltet ist. Da Relais kostengünstig sind, ist so eine preiswerte Realisierung der erfindungsgemäßen Anordnung möglich.

Wird als Datenübertragungsschnittstelle ein USB-Anschluss verwendet, so bietet die Ausgestaltung nach Anspruch 5 den Vorteil, dass neben der Steuerung der Stromversorgung an den gleichen USB-Anschluss ein weiteres USB-Peripheriegerät angeschlossen werden kann Halbleiterschalter wie zB. Opto-Relais oder Halbleiterrelais benötigen nur einen geringen Steuerstrom. Somit kann an den selben USB-Anschluss eine weitere Last angeschlossen werden.

Mit der Ausgestaltung nach Anspruch 6 wird ein separates Einschalten aller an den Computer angeschlossenen Peripheriegeräte überflüssig. Dies erhöht den Bedienkomfort, da die Peripheriegeräte mit dem Einschalten des Computers betriebsbereit sind.

Die Ausgestaltungen nach Anspruch 7 und 8 haben den Vorteil, dass neben der Steuerung der Stromversorgung gleichzeitig noch die Verkabelung der Datenströme mittels ein und der selben Anordnung möglich ist. Mit mehreren USB-Anschlüssen können mehrere Peripheriegeräte mit dem Computer kommunizieren. Dies ist sinnvoll, da die meisten Computer nur über zwei USB-Anschlüsse verfügen und daher für mehrere Peripheriegeräte ein USB-Verteiler, ein sogenannter USB-Hub sinnvoll ist. Solche USB-Hubs werden normaler Weise als Einheit gefertigt. Es ist daher fertigungstechnisch einfach zu bewerkstelligen, einen solchen fertigen USB-Hub an die USB-Datenschnittstelle der erfindungsgemäßen Anordnung zur Stromversorgung anzuschließen und in das Gehäuse mit zu integrieren. Somit bilden USB-Hub und Mehrfachsteckdose eine Einheit, welche weniger Platz benötigt und sämtliche angeschlossenen Peripheriegeräte nicht nur mit Strom versorgt, sondern auch an den USB-Anschluss des Computers anbindet.

Die Stromversorgung leistungsstarker Geräte wie Drucker ist somit sichergestellt, da diese sonst über den USB-Anschluss selbst nicht mit ausreichend Strom versorgt werden könnten.

Auch die Ausgestaltung nach Anspruch 9 bietet vor allem fertigungstechnische Vorteile. Die Verwendung konventioneller Mehrfachsteckdosenleisten reduziert die Kosten. Des weiteren ist in diesen Mehrfachsteckdosenleisten fast immer noch ungenutzter Raum vorhanden, in den die Datenübertragungsschnittstelle mit den notwendigen Schaltmitteln eingebaut werden kann. Auch ein USB-Hub ist in vielen Mehrfachsteckdosenleisten noch unterzubringen, ohne dass sich das Gesamtvolumen erhöht.

Ausführungsbeispiele der vorliegenden Erfindung werden nachfolgend an Hand einiger Figuren näher erläutert. Es zeigen:
Figur 1 einen Computer und mehrere Peripheriegeräte, welche über eine vom Computergesteuerte Steckdosenleiste mit Strom versorgt werden,
Figur 2 den Aufbau einer mittels USB-Anschluss computergesteuerten Steckdosenleiste und
die Figuren 3 und 4 die Stecketbelegung der einzelnen Pins eines USB-Steckers.

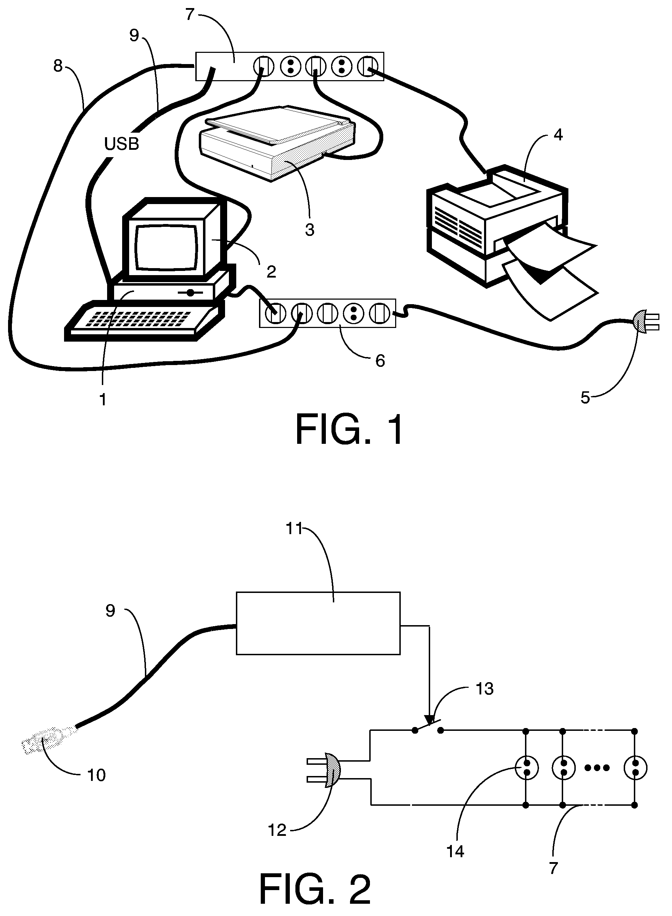

In Figur 1 ist zu sehen, wie das Prinzip einer über eine Datenschnittstelle gesteuerten Steckdosenleiste 7 aussieht. An einen PC 1 sind über Datenleitungen diverse Peripheriegeräte angeschlossen. Das sind ein Monitor 2, ein Scanner 3 und ein Drucker 4. Da diese Peripheriegeräte 2, 3, 4 einen Netzanschluss aufweisen, müssen sie mit dem Stromnetz verbunden sein. Dazu sind die Peripheriegeräte 2, 3, 4 in die neuartige Steckdosenleiste 7 eingesteckt. Diese wird wiederum von einer herkömmlichen Steckdosenleiste 6 versorgt, über die auch der PC 1 mit Strom versorgt wird. Über einen Netzstecker 5 ist die herkömmliche Steckdosenleiste 6 unmittelbar mit dem Stromnetz verbunden. D.h der PC 1 und die herkömmliche Steckdosenleiste 6 befinden sich in ständiger Verbindung mit dem Netz Die Peripheriegeräte 2, 3, 4 werden nur dann mit Strom versorgt, wenn die neuartige Steckdosenleiste 7 sie zuschaltet. Dies geschieht im einfachsten Fall dadurch, dass der PC 1 eingeschaltet wird Dann liegt an der Datenschnittstelle des PCs1, hier ein USB-Anschluss, eine Spannung an, welche in der computergesteuerten Steckdosenleiste 7 den Strom zu den Steckdosen 14 der Peripheriegeräke 2,3,4 durchschaltet. Wird der PC 1 wieder ausgeschaltet, wird auch der USB-Anschluss spannungslos, wodurch die Steckdosenleiste 7 abschaltet.

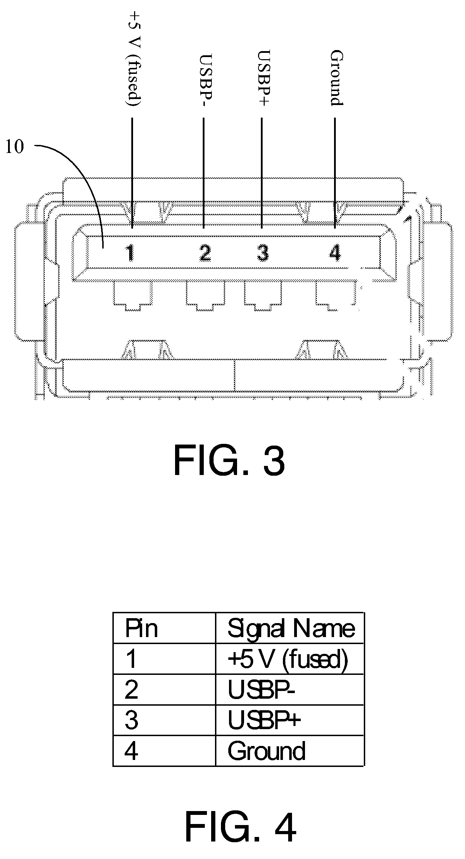

In Figur 2 wird nun der Aufbau einer solchen computergesteuerten Steckdosenleiste 7 näher gezeigt, welcher als Datenübertragungsschnittstelle den USB-Anschluss verwendet. Die Steckdosen 14 für die Peripheriegeräte 2,3,4 sind durch einen Schalter 13 von der Stromzuführung 12 trennbar. Der Schalter 13 wird dabei von einem Schaltungsbauteil 11, USB-Interface genannt, angesteuert. Dieses USB-Interface 11 besitzt ein USB-Anschlusskabel mit einem USB-Stecker 10. Dieser ist an den USB-Anschluss des PCs 1 angeschlossen. Wie die Steckerbelegung eines solchen USB-Steckers 10 aussieht, ist den Figuren 3 und 4 zu entnehmen Die beiden äußeren Pins des Steckers 10 dienen der Stromversorgung angeschlossener Geräte, welche einen geringen Stromverbrauch haben. So kann zB. der Scanner 3 auch direkt über den USB-Anschluss mit Strom versorgt werden. Beim Monitor 2 und beim Drucker 4 ist dies aber nicht möglich, da sie zuviel Strom verbrauchen und die maximale Last am USB-Anschluss 500 mA beträgt. Hier ist auf jeden Fall ein Netzanschluss notwendig. Als Schalter 13 ist ein Relais vorgesehen. Ist nun der PC 1 eingeschaltet, liegt an den beiden äußeren Pins des Steckers 10 eine Spannung an und das Relais schaltet die Steckdosen 14 an die Stromzuführung 12. Nun werden alle Peripheriegeräte 2,3,4 mit Strom versorgt. Wird der PC wieder ausgeschaltet, öffnet das Relais wieder und die Stromversorgung der Steckdosen 14 wird unterbrochen.

Statt eines Relais kann als Schalter 13 aber auch ein Opto-Relais oder ein Halbleiterschalter verwendet werden. Diese benötigen nur einen schwachen Steuerstrom von ca. 10 mA, so dass der USB-Anschluss 10 kaum belastet wird und von einem weiteren USB-Gerät belastet werden kann. Ist an der Steckdosenleiste 7 ein externer USB-Anschluss vorgesehen, so kann an diesen das weitere USB-Gerät angeschlossen werden, indem das USB-Signal an dieses Gerät durchgeschleift wird

An Stelle des einen externen USB-Anschlusses kann auch ein USB-Hub in die Steckdosenleiste 7 integriert werden, so können mehrere Geräte mit USB-Anschluss angeschlossen werden, wobei die Stromversorgung dann zweckmäßiger Weise über die Steckdosen 14 erfolgt, da über den USB-Anschluss selbst allen Geräten insgesamt nur maximal 500 mA zur Verfügung stehen, was nicht ausreicht. Eine solche Steckdosenleiste 7 stellt eine Datenverteilungszentrale mit Stromversorgungszentrale dar und passt in das leicht modifizierte Gehäuse einer herkömmlichen Steckdosenleiste.

Als Ausbaustufe ist vorgesehen, nicht auf die Betriebsspannung der beiden äußeren Pins des USB-Steckers 10 zurückzugreifen, sondern die USB-Signale selbst zu verwenden. Dazu ist in das USB-Interface 11 ein Decoder für USB-Signale eingebaut. Außerdem sind statt des einen Schalters 13 alle Steckdosen 14 der Steckdosenleiste 7 durch den Decoder separat in Abhängigkeit der USB-Signale schaltbar. Die Steckdosen 14 können nun vom PC 1 aus individuell über eine entsprechende Software ein- und ausgeschaltet werden. So kann zB. gezielt der Drucker 4 nur dann zugeschaltet werden, wenn ein Druckvorgang anliegt. Dies senkt den Stromverbrauch, da sich dann der Drucker 4 nicht im Stand-by Modus befindet, wenn er nicht benötigt wird, sondern komplett ausgeschaltet ist.

Anstatt des im Ausführungsbeispiel verwendeten USB-Anschluss sind auch andere Datenübertragungsschnittstellen wie parallele und serielle Computerschnittstellen oder der IEEE 1394-Anschluss nutzbar.

## Patentansprüche

1. Anordnung zur Stromversorgung von Peripheriegeräten (2, 3, 4) eines elektronischen Geräts (1) mit wenigstens einer Datenübertragungsschnittstelle, wobei die Anordnung wenigstens eine Steckdose (14) und einen Netzanschlussstecker (12) aufweist sowie eine Datenübertragungsschnittstelle (10), welche zur Steuerung des Einschaltens und Ausschaltens der Steckdose (14) vorgesehen ist.

2. Anordnung nach Anspruch 1,
**dadurch gekennzeichnet,**
**dass** die Datenübertragungsschnittstelle (10) ein USB-Anschluss ist.

3. Anordnung nach Anspruch 1,
**dadurch gekennzeichnet,**
**dass** wenigstens zwei (14) Steckdosen vorhanden sind, welche unabhängig voneinander über von der Datenschnittstelle (10) übertragene Befehle geschaltet werden können.

4. Anordnung nach Anspruch 1,
**dadurch gekennzeichnet,**
**dass** als Schaltelement (13) zum Schalten der Steckdosen (14) ein elektromagnetisches Relais vorgesehen ist.

5. Anordnung nach Anspruch 2,
**dadurch gekennzeichnet,**
**dass** als Schaltelement (13) zum Schalten der Steckdosen (14) ein Halbleiterrelais vorgesehen ist.

6. Anordnung nach Anspruch 1,
**dadurch gekennzeichnet,**
**dass** vorgesehen ist, dass die Steckdosen (14) gemeinsam eingeschaltet werden, wenn über die Datenschnittstelle (10) ein Strom fließt und gemeinsam ausgeschaltet werden, wenn kein Strom über die Datenschnittstelle (10) fließt.

7. Anordnung nach Anspruch 2,
**dadurch gekennzeichnet,**
**dass** diese zusätzlich zum USB-Anschluss (10) wenigstens einen USB-Anschluss zur Datenübertragung an Peripheriegeräte (2, 3, 4) aufweist.

8. Anordnung nach Anspruch 2,
**dadurch gekennzeichnet,**
**dass** zusätzlich zum USB-Anschluss (10) ein USB-Hub integriert ist.

9. Anordnung nach Anspruch 8,
**dadurch gekennzeichnet,**
**dass** die Datenübertragungsschnittstelle (10) und erforderliche Schaltmittel (11,13) in eine Mehrfachsteckdosenleiste (7) eingsbaut sind.

10. System mit einem elektronischen Gerät (1) und wenigstens einem Peripheriegerät (2,3, 4),
**dadurch gekennzeichnet,**
**dass** vorgssehen ist, das Peripheriegerät (2, 3, 4) über eine Anordnung nach Anspruch 1 mit Strom zu versorgsn.
